# DEMANDE DE BREVET EUROPEEN

(11) **EP 1 473 928 A1**
(43) Date de publication de la demande: **03.11.2004**
(21) Numéro de dépôt: 04300200.5
(22) Date de dépôt: 08.04.2004
(51) Int. Cl.: H04N 3/15

(54) **Commande d'une cellule photosensible**

(30) Priorité: 11.04.2003 FR 0304564
(71) Demandeur: STMicroelectronics S.A., 92120 Montrouge (FR)
(72) Inventeur: Cazaux, Yvon, 38100 Grenoble (FR); Herault, Didier, 38000 Grenoble (FR)
(74) Mandataire: de Beaumont, Michel

(57) **Abrégé**

L'invention concerne un procédé de commande d'une cellule photosensible comprenant une photodiode reliée à un noeud de lecture par l'intermédiaire d'un transistor MOS de transfert, le noeud de lecture étant relié à une source d'un potentiel de référence par l'intermédiaire d'un transistor MOS d'initialisation, comprenant de façon cyclique une phase d'attente à la fin de laquelle la photodiode est isolée du potentiel de référence ; une phase d'intégration pendant laquelle la tension de la photodiode varie depuis une tension d'initialisation jusqu'à une tension utile qui dépend de l'éclairement ; et une phase de lecture d'une tension représentative de la tension utile, dans lequel l'isolation de la photodiode du noeud de lecture en fin de phase d'attente comprend les étapes de mise à l'état passant du transistor de transfert, le transistor d'initialisation étant bloqué ; blocage du transistor de transfert ; et mise à l'état passant du transistor d'initialisation.

## Description

La présente invention concerne la commande d'une cellule photosensible d'un capteur d'images destiné à être utilisé dans des dispositifs de prise de vues tels que, par exemple, des caméras vidéos ou des appareils photographiques numériques. Plus particulièrement, la présente invention concerne une cellule photosensible réalisée sous forme monolithique à base de semiconducteurs.

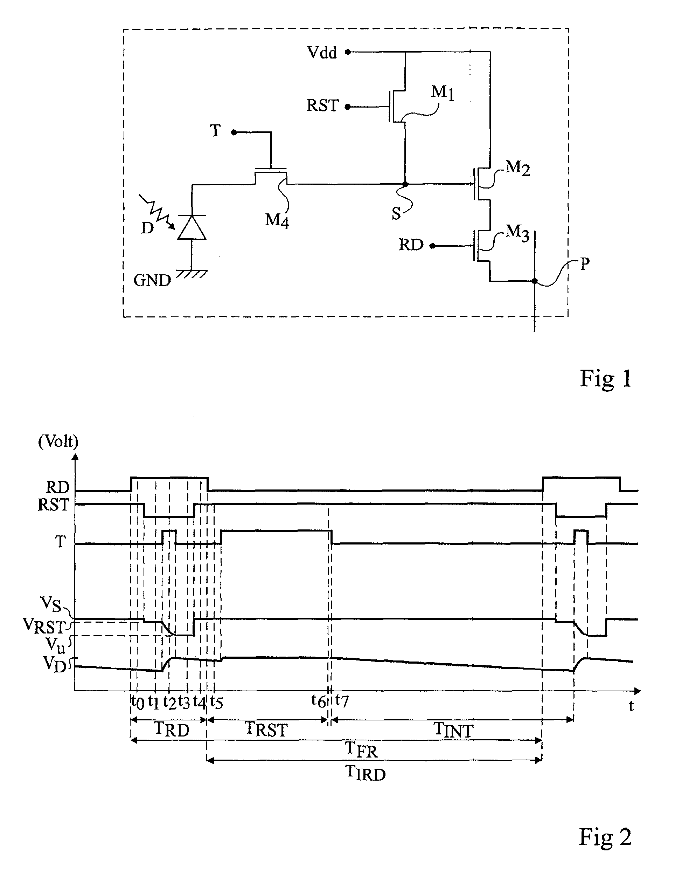

La figure 1 illustre schématiquement le circuit d'une cellule photosensible d'une matrice de cellules photosensibles réparties en rangées et en colonnes d'un capteur d'images. A chaque cellule photosensible de la matrice sont associés un dispositif d'initialisation et un dispositif de lecture. Le dispositif d'initialisation est constitué d'un transistor MOS à canal N M₁, interposé entre un rail d'alimentation Vdd et un noeud de lecture S. La grille du transistor d'initialisation M₁ est propre à recevoir un signal de commande d'initialisation RST. Le noeud de lecture S est propre à stocker des charges. Pour ce faire, une diode réalisée par un composant distinct peut être connectée au noeud S. La capacité du noeud S peut également correspondre aux capacités des sources des transistors M₁ et M₄, à la capacité d'entrée du transistor M₂ ainsi qu'à l'ensemble des capacités parasites présentes au noeud S.

Le dispositif de lecture est constitué de la connexion en série de premier et second transistors MOS à canal N M₂, M₃. Le drain du premier transistor de lecture M₂ est connecté au rail d'alimentation Vdd. La source du second transistor de lecture M₃ est connectée à une borne de sortie P. La grille du premier transistor de lecture M₂ est reliée au noeud de lecture S. La grille du deuxième transistor de lecture M₃ est propre à recevoir un signal de lecture RD. La position relative des transistors de lecture M₂ et M₃ peut éventuellement être inversée sans modifier sensiblement le fonctionnement de l'appareil.

La cellule photosensible comprend une photodiode D dont l'anode est reliée à un rail d'alimentation de référence ou masse du circuit GND et la cathode est reliée au noeud de lecture S par l'intermédiaire d'un transistor MOS à canal N de transfert M₄. La grille du transistor de transfert M₄ est propre à recevoir un signal de commande de transfert T_{X}. De façon générale, les signaux RD, RST, et T_{X} sont fournis par des circuits de commande non représentés en figure 1 et peuvent être fournis simultanément à l'ensemble des cellules photosensibles d'une même rangée de la matrice de cellules. Les bornes de sortie P des cellules photosensibles d'une même colonne sont reliées à un circuit de traitement (non représenté).

La figure 2 représente un exemple de chronogramme des signaux RD, RST, T_{X} de la tension V_{S} entre le noeud de lecture S et la masse du circuit, et de la tension V_{D} aux bornes de la photodiode D du circuit de la figure 1 entre deux cycles de lecture de la cellule photosensible. Les signaux RD, RST et T_{X} sont des signaux binaires variant entre des niveaux hauts et bas qui peuvent être différents pour chacun des signaux.

La durée T_{RD} correspond à la durée d'un cycle de lecture. Au début d'un cycle de lecture, une certaine quantité de charges (des électrons) est stockée au niveau de la photodiode D. Le cycle de lecture débute lorsque le signal RD passe au niveau haut ce qui correspond à la sélection de la rangée de la matrice contenant la cellule photosensible à lire. Le signal RST est alors à l'état haut. Le transistor d'initialisation M₁ est donc passant. La tension V_{S} est alors sensiblement égale à la tension Vdd. Le signal RST est alors mis à l'état bas. Le transistor d'initialisation M₁ est donc bloqué. La tension V_{S} au noeud de lecture S est alors fixée à un niveau d'initialisation V_{RST} qui peut être inférieur à la tension Vdd en raison d'un couplage avec le transistor d'initialisation M₁. Le niveau d'initialisation V_{RST} est généralement perturbé par un bruit provenant essentiellement du bruit thermique du canal du transistor d'initialisation M₁. Ce bruit est échantillonné et maintenu sur le noeud de lecture lors du blocage du transistor d'initialisation M₁. Le niveau d'initialisation V_{RST} est alors mémorisé à l'extérieur de la cellule photosensible par l'intermédiaire des transistors de lecture M₂, M₃.

Le signal de commande de transfert T_{X} est alors mis à l'état haut. Le transistor de transfert M₄ est donc passant ce qui permet le transfert des charges stockées dans la photodiode D vers le noeud de lecture S. La photodiode D est conçue de telle sorte que toutes les charges stockées dans celle-ci sont transférées vers le noeud de lecture S. La tension V_{S} diminue alors jusqu'à un niveau de signal utile V_{U}. Le signal T_{X} est ensuite remis au niveau bas. La photodiode D est donc isolée à nouveau et, en raison de l'éclairement lumineux, des charges sont à nouveau stockées. Le niveau de signal utile V_{U} au noeud de lecture S est alors lu par l'intermédiaire des transistors de lecture M₂, M₃. Comme le niveau d'initialisation V_{RST}, le niveau de signal utile V_{U} est perturbé notamment par le bruit thermique du canal du transistor d'initialisation M₁ qui a été échantillonné et maintenu sur le noeud de lecture. La soustraction des signaux V_{U} et V_{RST} par le circuit de traitement permet l'élimination du bruit du transistor d'initialisation M₁ par un double échantillonnage corrélé. Le signal RST est mis à l'état haut. La tension V_{S} au noeud de lecture S est alors maintenue égale à la tension Vdd. Le cycle de lecture se termine lorsque le signal RD est mis à l'état bas pour désélectionner la cellule photosensible.

La durée T_{FR} entre le début de deux cycles de lecture d'une même rangée de cellules photosensibles correspond à la durée ou période d'une trame du capteur d'images. La durée T_{IRD} entre la fin d'un cycle de lecture d'une rangée de cellules et le début du cycle de lecture suivant de la même rangée de cellules peut être telle que lors d'un éclairement trop intense, une saturation de la photodiode peut survenir. Il est donc préférable de limiter la durée T_{INT} de la phase d'intégration pendant laquelle des charges sont formées et stockées au niveau de chaque photodiode D.

Pour ce faire, un exemple de commande classique consiste à maintenir le signal de commande d'initialisation RST à l'état haut pendant toute la durée T_{IRD} entre deux cycles de lecture d'une même rangée. Le signal de commande de transfert T_{X} est mis à l'état haut peu après la fin d'un cycle de lecture. La photodiode D se décharge alors en permanence vers le rail d'alimentation. Le signal T_{X} est mis à l'état bas à l'achèvement d'une durée T_{RST} après la fin du cycle de lecture pour commencer une phase d'intégration.

Pour des technologies de plus en plus denses avec des cellules photosensibles de petites dimensions et des signaux de commande de plus en plus faibles, il devient difficile d'assurer un bon transfert de charges de la photodiode D vers le noeud de lecture S pendant un cycle de lecture ou avant le début d'une phase d'intégration.

Pour améliorer le transfert de charges, on augmente le niveau haut du signal T_{X} appliqué sur la grille du transistor de transfert M₄ pour augmenter l'intensité du champ électrique permettant le passage des charges. Toutefois, si ce niveau devient trop important, un puits de potentiel se crée dans le canal du transistor de transfert M₄ d'une valeur supérieure à la tension d'initialisation V_{RST}. Des charges peuvent alors être stockées pendant le transfert de charges dans la région de canal du transistor de transfert M₄. Une partie de ces charges peut alors être renvoyée vers la photodiode D lors du front descendant du signal T_{X} du niveau haut vers le niveau bas.

Lorsque la cellule photosensible est soumise à un faible éclairement, il apparaît que le risque de retour de charges est plus important avec une telle mise en oeuvre lorsque le signal de transfert T_{X} est mis à l'état bas avant le début d'une phase d'intégration que lors d'un cycle de lecture. Ceci peut se traduire par une injection de charges depuis le noeud de lecture S vers la photodiode avant la phase d'intégration et conduire à un offset du signal mesuré ultérieurement en l'absence de lumière s'accompagnant par une augmentation des non uniformités à bas niveau de signal.

La présente invention prévoit un procédé et un dispositif de commande d'une cellule photosensible permettant d'améliorer le transfert complet des charges de la photodiode vers le noeud de lecture avant le début d'une phase d'intégration de la photodiode.

Dans ce but, la présente invention prévoit un procédé de commande d'une cellule photosensible comprenant une photodiode reliée à un noeud de lecture par l'intermédiaire d'un transistor MOS de transfert, le noeud de lecture étant relié à une source d'un potentiel de référence par l'intermédiaire d'un transistor MOS d'initialisation, comprenant de façon cyclique une phase d'attente d'une durée non nulle à la fin de laquelle la photodiode est isolée du potentiel de référence ; une phase d'intégration pendant laquelle la tension de la photodiode varie depuis une tension d'initialisation jusqu'à une tension utile qui dépend de l'éclairement ; et une phase de lecture d'une tension représentative de la tension utile, dans lequel l'isolation de la photodiode du noeud de lecture en fin de phase d'attente comprend les étapes de mise à l'état passant du transistor de transfert, le transistor d'initialisation étant bloqué ; blocage du transistor de transfert ; et mise à l'état passant du transistor d'initialisation.

Selon un mode de réalisation de la présente invention, l'étape de mise à l'état passant du transistor de transfert est précédée par une étape de blocage du transistor d'initialisation, le transistor de transfert étant bloqué.

Selon un mode de réalisation de la présente invention, un blocage du transistor de transfert est réalisé pendant la phase de lecture qui précède la phase d'attente, le transistor de transfert étant maintenu bloqué au début de la phase d'attente.

Selon un mode de réalisation de la présente invention, un blocage du transistor de transfert est réalisé pendant la phase d'attente avant le blocage du transistor d'initialisation.

Selon un mode de réalisation de la présente invention, le transistor d'initialisation est rendu passant dès la fin de la phase de lecture qui précède la phase d'attente et est maintenu passant au début de la phase d'attente.

Selon un mode de réalisation de la présente invention, l'étape de blocage du transistor d'initialisation est réalisée pendant la phase de lecture qui précède la phase d'attente, le transistor d'initialisation étant maintenu bloqué au début de la phase d'attente.

Selon un mode de réalisation de la présente invention, le transistor de transfert est rendu passant de façon temporaire plusieurs fois pour décharger la photodiode en fin de phase d'attente, le transistor d'initialisation étant maintenu bloqué.

La présente invention prévoit également un dispositif de commande d'une cellule photosensible comprenant une photodiode dont la tension varie en fonction de l'éclairement, la photodiode étant reliée à un noeud de lecture par l'intermédiaire d'un transistor MOS de transfert, le noeud de lecture étant relié à une source d'un potentiel de référence par l'intermédiaire d'un transistor MOS d'initialisation, un moyen de lecture d'une tension représentative de la tension de la photodiode, un moyen d'isolation de la photodiode du potentiel de référence et un moyen de temporisation pour retarder l'isolation de la photodiode par le moyen d'isolation après la lecture de la tension représentative par le moyen de lecture, dans lequel le moyen d'isolation comprend un moyen pour rendre temporairement passant le transistor de transfert tout en maintenant le transistor d'initialisation bloqué.

Selon un mode de réalisation de la présente invention, le transistor MOS d'initialisation et/ou le transistor MOS de transfert sont partagés entre plusieurs cellules photosensibles.

Selon un mode de réalisation de la présente invention, le moyen de lecture est partagé entre plusieurs cellules photosensibles.

Ces objets, caractéristiques et avantages, ainsi que d'autres de la présente invention seront exposés en détail dans la description suivante d'exemples de réalisation particuliers faite à titre non limitatif en relation avec les figures jointes parmi lesquelles :
la figure 1, précédemment décrite, représente un schéma électrique d'une cellule photosensible ;
la figure 2, précédemment décrite, illustre un chronogramme classique de tensions caractéristiques du circuit de la figure 1 ;
la figure 3 représente une vue en coupe partielle et schématique d'une partie du circuit de la figure 1 réalisée sous forme monolithique ;
les figures 4A à 4H représentent, de façon schématique des niveaux de potentiel dans la structure de la figure 3 à des instants donnés du chronogramme de la figure 2 ; et
la figure 5 représente un exemple de chronogramme de tensions caractéristiques selon la présente invention du circuit de la figure 1.

Les inventeurs ont étudié l'évolution des potentiels caractéristiques au niveau d'une cellule photosensible de façon à mettre en évidence les phénomènes qui favorisent le retour de charges lors d'un cycle de lecture ou avant le début d'une phase d'intégration d'une cellule photosensible.

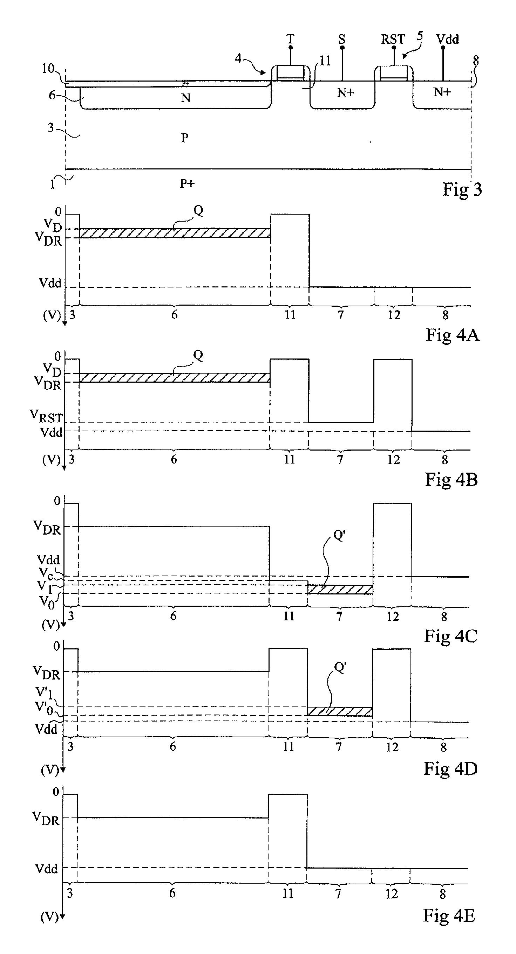

La figure 3 illustre, selon une vue en coupe partielle et schématique, une réalisation classique sous forme monolithique de l'ensemble de la photodiode D, du transistor de transfert M₄ et du transistor d'initialisation M₁ de la figure 1. Ces éléments sont réalisés dans une même zone active d'un substrat semiconducteur 1 d'un premier type de conductivité, par exemple de type P, fortement dopé (P⁺) . Le substrat est relié au rail d'alimentation de référence GND. La zone active correspond à une couche 3 de même type de conductivité que le substrat 1 sous-jacent, mais plus faiblement dopée, par exemple une couche épitaxiée. Au-dessus de la surface de la couche 3 sont formées deux structures de grilles isolées 4, 5, éventuellement munies d'espaceurs latéraux, associées respectivement aux transistors M₄ et M₁. A gauche de la grille 4, entre les grilles 4, 5 et à droite de la grille 5, se trouvent respectivement, à la surface de la couche 3, des régions 6, 7, 8 du type de conductivité opposé, par exemple N.

La région 7, intermédiaire entre les grilles 4, 5, est fortement dopée (N⁺) et forme respectivement le drain et la source des transistors M₄ et M_{1.} Elle est appelée par la suite région de lecture 7. La région 6 à gauche de la structure de grille 4, appelée par la suite région de photodiode, est réalisée sur une surface beaucoup plus importante que la région de lecture 7. Elle constitue la source du transistor M₄ et forme avec la couche 3 sous-jacente la jonction de la photodiode D. La région 8, à droite de la grille 5, appelée par la suite région d'alimentation, forme le drain du transistor M₁. La grille 4, la région de lecture 7, la grille 5 et la région d'alimentation 8 sont solidaires de connexions (non représentées) qui permettent de mettre en contact ces régions respectivement avec le signal de commande de transfert T_{X}, la grille du transistor M₂ (noeud S), le signal de commande d'initialisation RST et le rail d'alimentation Vdd. La photodiode D est du type dit complètement déplété et comporte, à la surface de la région de photodiode 6, une région de type P 10, peu profonde et plus fortement dopée (P⁺) que la couche 3 et connectée au potentiel de référence ou masse par l'intermédiaire de la couche 3 et du substrat 1. Les régions de canal des transistors M₄ et M₁ sont respectivement désignées par les références 11 et 12.

Les figures 4A à 4H illustrent de façon schématique les niveaux de potentiel les plus élevés dans les différentes régions de la figure 3 successivement à des instants successifs t₀ et t₆ du chronogramme de la figure 2.

A l'instant t₀, au début d'un cycle de lecture de la cellule photosensible, la photodiode D a stocké une quantité de charges représentée par une zone hachurée Q sur la figure 4A, délimitée par un potentiel VD correspondant au potentiel dans la région de photodiode 6 et le potentiel V_{DR} de la photodiode D lorsqu'elle est complètement déchargée. Le signal de commande de transfert T_{X} est à l'état bas. Le potentiel de la région de canal 11 du transistor M₄ est donc proche de zéro volt. Les potentiels de la région de lecture 7, de la région de canal 12 du transistor M₄, et de la région d'alimentation 8 sont au potentiel de l'alimentation Vdd.

A l'instant t₁, comme cela est représenté en figure 4B, le signal de commande d'initialisation RST est mis à l'état bas. Le potentiel de la région de canal 12 du transistor M₁ est donc proche de zéro volt. En raison des phénomènes de couplage entre la région de lecture 7 et le transistor M₁, le potentiel de la région de lecture 7 passe à un potentiel V_{RST} légèrement inférieur au potentiel de l'alimentation Vdd.

A l'instant t₂, comme cela est représenté en figure 4C, le signal de commande de transfert T_{X} est mis à un état haut suffisamment élevé pour que le potentiel V_{C} de la région de canal 11 soit supérieur à Vdd. Le potentiel de la région de lecture 7 augmente jusqu'à un potentiel V₀ en raison du couplage entre le transistor M₄ et la région de lecture 7. Ceci permet d'accroître le champ électrique favorisant le transfert des charges de la photodiode D vers le noeud de lecture S. Les charges stockées au niveau de la photodiode D s'écoulent vers la région de lecture 7 et font augmenter le potentiel de cette région jusqu'à la valeur V₁. Dans le cas où la charge Q est relativement faible, le potentiel V₁ peut être supérieur à Vdd et supérieur à V_{C}. La région hachurée Q' délimitée par les potentiels V₀ et V₁ représente les charges stockées au niveau de la région de lecture 7.

A l'instant t₃, comme cela est représenté en figure 4D, le signal de transfert T_{X} est mis à l'état bas. Le potentiel de la région de canal 11 du transistor M₄ passe donc à zéro. Aucune charge étant stockée dans la région de canal 11 pour de faibles charges Q, il n'y a pas alors de retour de charge vers la photodiode D. Le couplage du front du signal de transfert T_{X} amène le potentiel V₀' sensiblement au potentiel V_{RST} de la figure 4B.

A l'instant t₄, comme cela est représenté en figure 4E, le signal de commande d'initialisation RST est mis à l'état bas. Le potentiel de la région de canal 12 du transistor M₁ augmente donc de façon à permettre l'écoulement des charges Q" stockées au niveau de la région de lecture 7 vers la région d'alimentation 8. Les potentiels des régions 7, 12 et 8 se stabilisent donc au niveau du potentiel d'alimentation Vdd.

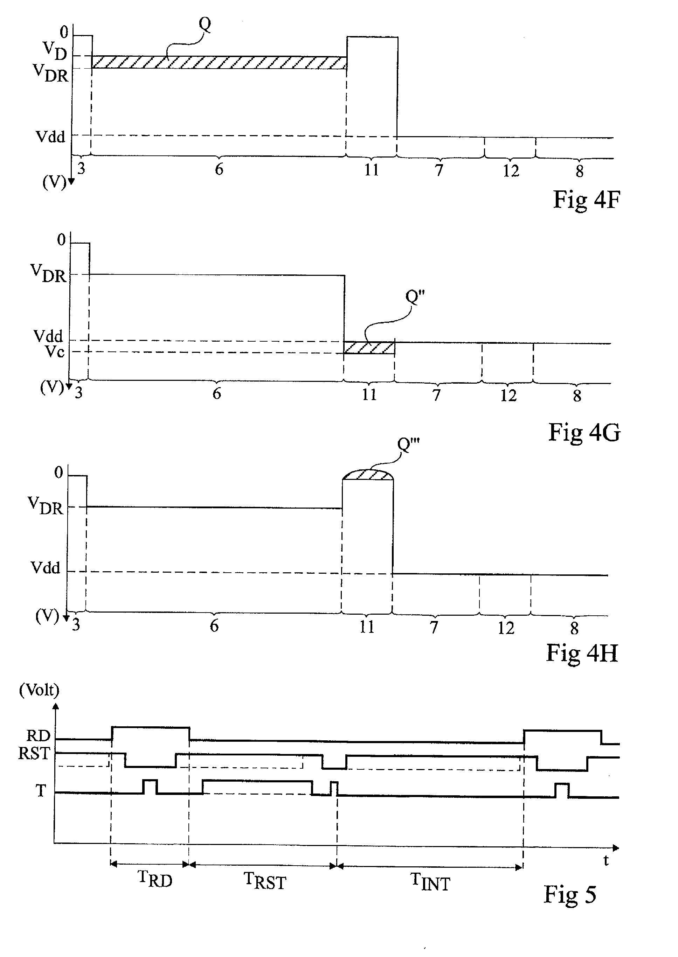

A l'instant t₅, comme cela est représenté en figure 4F, après la fin du cycle de lecture et avant le début de la phase d'intégration suivante, les signaux de commande T_{X} et RST ont la même valeur qu'à l'instant t₄. Toutefois, une certaine quantité de charges a été produite et est stockée au niveau de la diode D comme cela est représenté par la région barrée Q.

A l'instant t₆, comme cela est représenté en figure 4G, le signal de commande de transfert T_{X} est mis à l'état haut. Les charges stockées au niveau de la photodiode D s'écoulent vers la région d'alimentation 8 et les potentiels des régions 11, 7, 12 et 8 se stabilisent à la valeur Vdd. Des charges sont alors stockées au niveau de la région de canal 11 et sont représentées par la zone hachurée Q" délimitée par le potentiel Vdd et le potentiel V_{C} fixé par la valeur de l'état haut du signal de commande de transfert T_{X}.

Les inventeurs ont mis en évidence, en figure 4G, que lorsque le signal T_{X} est mis à l'état haut, il ne se produit pas de couplage entre le transistor M₄ et la région de lecture 7. En effet, le transistor M₁ étant ouvert, la région de lecture 7 n'est pas isolée de la région d'alimentation 8 et se trouve donc à faible impédance.

A l'instant t₇, comme cela est représenté en figure 4H, le signal de commande de transfert T_{X} est mis à l'état bas. Une partie des charges Q" stockées au niveau de la région de canal 11 en figure 4G risque alors d'être renvoyée vers la photodiode, comme cela est illustrée de façon schématique par la quantité de charges Q"'.

La présente invention consiste donc à proposer un chronogramme particulier des signaux de commande d'une cellule photosensible avant le début d'une nouvelle phase d'intégration de façon à réduire le risque de retour de charges.

La figure 5 représente deux exemples de réalisation d'un chronogramme selon l'invention. Dans le premier exemple de réalisation représenté en traits pleins, le signal d'initialisation RST est maintenu à l'état passant depuis la fin du cycle de lecture et le signal de commande de transfert T_{X} est mis à l'état haut peu après la fin du cycle de lecture. Le procédé de commande prévoit, avant le début d'une phase d'intégration T_{INT}, de mettre au niveau bas successivement le signal T_{X} et le signal RST. Le signal T_{X} est alors remis à l'état haut un court instant puis à nouveau à l'état bas. On bénéficie alors du couplage favorable illustré en figure 4C entre le transistor M₄ et la région de lecture 7 dû au fait que celle-ci est à haute impédance lors de la mise à l'état haut du signal T_{X} puisqu'elle est alors isolée de la région d'alimentation 8. Le premier front descendant du signal T_{X} est effectué alors que le signal RST est à l'état haut afin que la région de lecture 7 soit à faible impédance et qu'il n'y ait pas de couplage défavorable entre le transistor de transfert M₄ et la région de lecture 7.

Selon le second exemple de réalisation, représenté en traits pointillés, les signaux RST et T_{X} sont maintenus à l'état bas depuis la fin du cycle de lecture précédent. La présente invention prévoit de mettre un court instant à l'état haut le signal RST pour décharger complètement le noeud de lecture S et de le remettre à l'état bas puis de mettre un court instant à l'état haut le signal T_{X} et de le remettre à l'état bas alors que le signal RST est toujours à l'état bas.

La présente invention consiste donc avant de débuter une nouvelle période d'intégration, d'effectuer le front montant et un front descendant du signal de commande de transfert lorsque la région de lecture 7 est à haute impédance pour bénéficier d'un couplage favorable.

Il est à noter que plusieurs impulsions successives du signal de commande de transfert T peuvent être prévues avant le début d'une période d'intégration.

Le procédé de commande selon l'invention permet d'obtenir, lors de la décharge de la photodiode avant le début d'une phase d'intégration, un phénomène de couplage favorable qui permet de réduire le risque de retour de charges vers la photodiode lorsque la quantité de charges stockée dans la photodiode est faible. On réduit donc l'apparition de défauts sur une image formée à partir de la lecture des cellules photosensibles particulièrement pour de faibles éclairages. Ceci est particulièrement avantageux étant donné la sensibilité accrue des utilisateurs aux défauts des images obtenues sous de faibles éclairages.

Bien entendu, la présente invention est susceptible de diverses variantes et modifications qui apparaîtront à l'homme de l'art. En particulier, l'invention a été décrite dans le cadre d'une cellule photosensible à quatre transistors MOS (cellules 4T). Il est clair que la présente invention trouve une application pour d'autres types de cellules photosensibles. Il s'agit, par exemple, d'une cellule photosensible ayant un ou plusieurs transistors MOS en commun avec une ou plusieurs autres cellules photosensibles.

## Revendications

1. Procédé de commande d'une cellule photosensible comprenant une photodiode (D) reliée à un noeud de lecture (S) par l'intermédiaire d'un transistor MOS de transfert (M₄), le noeud de lecture étant relié à une source d'un potentiel de référence (Vdd) par l'intermédiaire d'un transistor MOS d'initialisation (M₁), comprenant de façon cyclique :
- une phase d'attente d'une durée non nulle à la fin de laquelle la photodiode est isolée du potentiel de référence ;
- une phase d'intégration pendant laquelle la tension de la photodiode varie depuis une tension d'initialisation jusqu'à une tension utile qui dépend de l'éclairement ; et
- une phase de lecture d'une tension représentative de la tension utile,
**caractérisé en ce que** l'isolation de la photodiode du noeud de lecture en fin de phase d'attente comprend les étapes suivantes :
- mise à l'état passant du transistor de transfert, le transistor d'initialisation étant bloqué ;
- blocage du transistor de transfert ; et
- mise à l'état passant du transistor d'initialisation.

2. Procédé selon la revendication 1, dans lequel l'étape de mise à l'état passant du transistor de transfert (M₄) est précédée par une étape de blocage du transistor d'initialisation (M₁), le transistor de transfert étant bloqué.

3. Procédé selon la revendication 1, dans lequel un blocage du transistor de transfert (M₄) est réalisé pendant la phase de lecture qui précède la phase d'attente, le transistor de transfert étant maintenu bloqué au début de la phase d'attente.

4. Procédé selon la revendication 1, dans lequel un blocage du transistor de transfert (M₄) est réalisé pendant la phase d'attente avant le blocage du transistor d'initialisation (M₁) .

5. Procédé selon la revendication 1, dans lequel le transistor d'initialisation (M₁) est rendu passant dès la fin de la phase de lecture qui précède la phase d'attente et est maintenu passant au début de la phase d'attente.

6. Procédé selon la revendication 2, dans lequel l'étape de blocage du transistor d'initialisation (M₁) est réalisé pendant la phase de lecture qui précède la phase d'attente, le transistor d'initialisation étant maintenu bloqué au début de la phase d'attente.

7. Procédé selon la revendication 1, dans lequel le transistor de transfert (M₄) est rendu passant de façon temporaire plusieurs fois pour décharger la photodiode (D) en fin de phase d'attente, le transistor d'initialisation (M₁) étant maintenu bloqué.

8. Dispositif de commande d'une cellule photosensible comprenant une photodiode (D) dont la tension varie en fonction de l'éclairement, la photodiode étant reliée à un noeud de lecture (S) par l'intermédiaire d'un transistor MOS de transfert (M₄), le noeud de lecture étant relié à une source d'un potentiel de référence (Vdd) par l'intermédiaire d'un transistor MOS d'initialisation (M₁), un moyen de lecture (M₂, M₃) d'une tension représentative de la tension de la photodiode, un moyen d'isolation de la photodiode du potentiel de référence et un moyen de temporisation pour retarder l'isolation de la photodiode par le moyen d'isolation après la lecture de la tension représentative par le moyen de lecture, **caractérisé en ce que** le moyen d'isolation comprend un moyen pour rendre temporairement passant le transistor de transfert tout en maintenant le transistor d'initialisation bloqué.

9. Dispositif selon la revendication 8, dans lequel le transistors MOS d'initialisation (M₁) et/ou le transistor MOS de transfert (M₄) sont partagés entre plusieurs cellules photosensibles.

10. Dispositif selon la revendication 8, dans lequel le moyen de lecture (M₂, M₃) est partagé entre plusieurs cellules photosensibles.
